# EUROPÄISCHE PATENTSCHRIFT

(11) **EP 0 976 455 B1**
(45) Veröffentlichungstag und Bekanntmachung des Hinweises auf die Patenterteilung: **07.05.2008**
(21) Anmeldenummer: 99113460.2
(22) Anmeldetag: 13.07.1999
(51) Int. Cl.: B02C 17/24

(54) **Antriebszahnritzel für einen Zahnkranz/Ritzel-Antrieb**
Pinion for a toothed gear/pinion drive
Pignon pour entraînement du type roue dentée/pignon

(30) Priorität: 22.07.1998 DE 19832933
(43) Veröffentlichungstag der Anmeldung: 02.02.2000
(73) Patentinhaber: KHD Humboldt Wedag GmbH, 51067 Köln (DE)
(72) Erfinder: Hagedorn, Alexander, 50259 Pulheim (DE); Troeder, Christoph, Prof., 52072 Aachen (DE)

(56) Entgegenhaltungen:
- CH-A- 231 753
- DE-U- 9 000 530
- DE-U- 9 215 898
- FR-A- 926 384
- FR-A- 1 583 426

## Beschreibung

Die Erfindung betrifft ein Antriebszahnritzel für einen Zahnkranz/Ritzel-Antrieb von Drehtrommeln, wie z.B. Rohrmühlen, wobei das Ritzel in den Zahnkranz in Zahneingriff kommt.

Zum Antrieb von Drehtrommeln wie Rohrmühlen, Drehrohröfen und dergleichen ist es bekannt, am Trommelaußenumfang einen im Querschnitt ein T-Profil aufweisenden Zahnkranz drehfest zu befestigen, in dessen Zähne ein oder zwei Antriebszahnritzel in Eingriff kommen (EP-B- 0 175 109). Trommeldurchbiegungen können zu Trommelverkrümmungen führen, die auch in Verbindung mit unterschiedlichen Wärmeausdehnungen zu Relativverschiebungen und/oder Schrägstellungen der Zahnflanken mit ungleichmäßigem Zahnbreitenlastverhalten führen, so daß selbst bei gehärteten Zahnflanken der Zahnkranzantrieb und dessen Kraftübertragung gefährdet sein können. Um die Lastübertragung annähernd gleichmäßig über die ganze Zahnbreite zu verteilen und um ein einigermaßen gleichmäßiges Lastflankentragbild zu erreichen, ist schon vorgeschlagen worden, dem Zahnkranz ein sogenanntes selbsteinstellendes Antriebszahnritzel zuzuordnen, bei dem der Ritzelkörper mit einem kugelkalottenförmigen Sitz auf der Ritzelwelle ruht. Ein solches Ritzel ist zwar in der Lage, gegegenfalls Ausrichtfehler des Ritzels und/oder des Zahnkranzes auszugleichen; jedoch ist ein solches Ritzel in seinem Aufbau aufwendig.

In der FR 1.583.426 wird die Anordnung eines Lagerbocks auf einem Sockel offenbart, wobei der Lagerbock mit dem Sockel über ein elastisches Element miteinander verbunden ist. Das elastische Element kann über Hydraulikflüssigkeit gefüllt und entleert werden, wodurch sich Fehlstellungen des Lagerbocks ausgleichen lassen.

Die FR 926.384 lehrt die Lagerung von Antriebswellen für Ritzel in einer Druckhülse. Die Druckhülse ist in der Lage, geringfügige Fehlausrichtungen der Welle und geringe Radialspiele des Ritzels auszugleichen.

Schließlich offenbart die DE90 00 530 einen speziellen Laufring für Antriebsritzel einer großen Drehtrommel. Das Antriebsritzel sitzt auf einem Kugelausschnitt und ist so in der Lage, eine Taumelbewegung auf der Welle durchzuführen wodurch das Ritzel Fehlstellungen oder nicht exakte Ausrichtungen der Drehtrommel zur Antriebsanordnung ausgleichen kann.

Der Erfindung liegt die Aufgabe zugrunde, für einen Zahnkranz/Ritzel-Antrieb ein Antriebszahnritzel zu schaffen, das einfach gebaut und doch in der Lage ist, sich selbsttätig wie ein Gelenk an sich ändernde Betriebszustände des in Zahneingriff kommenden Zahnkranzes bzw. der angetriebenen Drehtrommel anzupassen.

Diese Aufgabe wird erfindungsgemäß mit den Merkmalen des Kennzeichnungsteils des Anspruchs 1 gelöst. Vorteilhafte Weiterbildungen der Erfindung sind in den Unteransprüchen angegeben.

Gemäß der Erfindung ist das Antriebszahnritzel dadurch selbsteinstellend gemacht, daß das Ritzel auf der Ritzelwelle und/oder die Ritzelwellenlager zu beiden Seiten des Ritzels und/oder die Ritzelwellenlagerböcke über räumlich elastisch verformbare Bauteile nachgiebig gelagert sind. Bei einer Ausführungsform der Erfindung kann das Ritzel von beiden Stirnseiten ausgehende Ausnehmungen aufweisen, in denen um den Ritzelwellenumfang herum ringförmige elastisch verformbare Bauteile angeordnet sind, über die sich das Ritzel auf der Ritzelwellenoberfläche elastisch federnd abstützt. Das erfindungsgemäße Antriebszahnritzel sitzt wie auf einem Kugelgelenk, ohne daß es dazu eines aufwendigen Aufbaus mit sphärisch gewölbten Kugelkalottenflächen bedarf. Durch die erfindungsgemäß eingesetzten räumlich elastisch verformbaren Bauteile des Zahnritzels bleiben beim Zahneingriff mit dem Zahnkranz eine über die Zahnbreite gleichmäßig verteilte Zahnflankenbelastung sowie gleichmäßige Zahnflankenlinienberührung immer erhalten. Darüberhinaus kann - im Gegensatz zu einem Ritzel mit kugelkalottenförmigem Sitz - das erfindungsgemäße Zahnritzel vermittels der wie eine Feder elastisch verformbaren Bauteile bei Bedarf sogar in radialer Richtung nachgiebig sein. Dabei kann die radiale Nachgiebigkeit der elastisch verformbaren Bauteile niedriger eingestellt sein als die Zahnsteifigkeit des Ritzels.

Beim erfindungsgemäßen Zahnritzel kann die Drehmomentübertragung von der Querkraftübertragung getrennt sein. Dann ist zwischen den beiden im Ritzelstirnseitenbereich angeordneten ringförmigen elastisch verformbaren Bauteilen eine Verzahnung zwischen Ritzel und Ritzelwelle zur Drehmomentübertragung angeordnet, die durch eine Innenverzahnung/Außenverzahnung sowie auch durch die Anwendung einer Paßfeder bewerkstelligt sein kann. Beim erfindungsgemäßen Zahnritzel können aber auch die Funktionen der Drehmomentübertragung und der Querkraftübertragung in einem Element zusammengefaßt sein. Um diese Aufgabe zu erfüllen, können die beiden im Ritzelstirnseitenbereich angeordneten ringförmigen elastisch verformbaren Bauteile wie sogenannte Spannsätze zwischen Ritzel und Ritzelwelle verspannt sein.

Nach einem weiteren Merkmal der Erfindung können die räumlich elastisch verformbaren ringförmigen Bauteile als Baueinheit aus einer Elastikbuchse bestehen, mit metallischem Außenring und Innenring, zwischen denen konzentrisch ein Elastomer-Ring geeigneten Elastizitätsmoduls eingespannt ist.

Die Erfindung und deren weitere Merkmale und Vorteile werden anhand der in den Figuren schematisch dargestellten Ausführungsbeispiele näher erläutert.
Es zeigt:
- Figur 1:: im Vertikallängsschnitt ein Antriebszahnritzel für den Zahnkranz/Ritzel-Antrieb einer Rohrmühle und
- Figur 2:: ausschnittsweise den Vertikalschnitt durch ein Zahnritzel, das über Elastikbuchsen auf der Ritzelwelle gelagert ist.

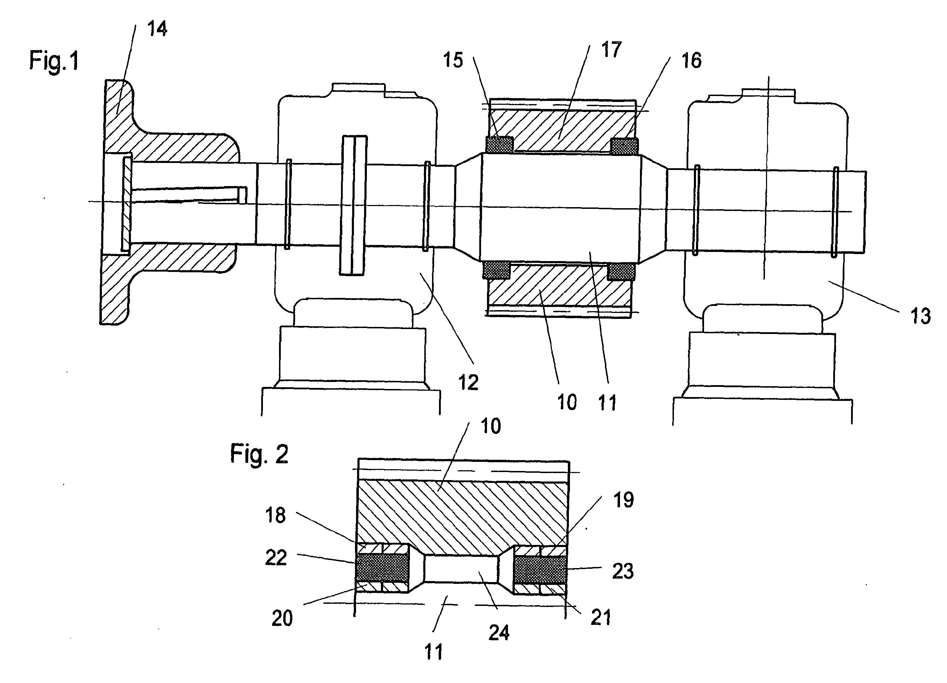

Nach Figur 1 ist das Antriebszahnritzel 10 an beiden Seiten vermittels seiner Ritzelwelle 11 in Wellenlagerböcken 12 und 13 drehbar gelagert. Mit 14 ist der Flansch zum Anflanschen der Ritzelwelle 11 an eine Getriebe-Vorgelegewelle für den Ritzelantrieb angezeigt.

Das Ritzel 10 mit seiner Außenverzahnung weist von beiden Stirnseiten ausgehende Ausnehmungen auf, in denen um den Ritzelwellenumfang herum ringförmige elastisch verformbare Bauteile 15 und 16 angeordnet sind, über die sich das Ritzel 10 auf der Oberfläche der Ritzelwelle 11 elastisch abstützt. Die Bauteile 15, 16 sind räumlich elastisch verformbar, so daß das Zahnritzel 10 auf alle möglichen sich ändernden Betriebszustände des Zahneingriffs mit dem Zahnkranz der Rohrmühle wie eine Feder nachgiebig reagieren kann.

Zur Drehmomentübertragung ist zwischen den beiden im Ritzelstirnseitenbereich angeordneten ringförmigen elastisch verformbaren Bauteilen 15 und 16 eine Verzahnung 17 zwischen Ritzel 10 und Ritzelwelle 11 angeordnet, die aus einer Innenverzahnung/Außenverzahnung oder auch aus einer Paßfederanordnung bestehen kann. Bei dieser Lösung sind beim Ritzel 10 die Drehmomentübertragung und die Querkraftübertragung voneinander getrennt. Es wäre aber auch möglich, beim Ritzel 10 die Funktionen der Drehmomentübertragung und der Querkraftübertragung in den ringförmigen elastisch verformbaren Bauteilen 15 und 16 zusammenzufassen. Dann müßten die Bauteile 15 und 16 wie sogenannte Spannsätze zwischen Ritzel 10 und Ritzelwelle 11 verspannt sein.

Aus Figur 2 geht hervor, daß die elastisch verformbaren Bauteile 15 und 16 der Figur 1 jeweils als Baueinheit aus einer Elastikbuchse bestehen können, mit wenigstens einem metallischen Außenring 18 bzw. 19 und wenigstens einem metallischen Innenring 20 bzw. 21, zwischen denen konzentrisch jeweils ein Elastomer-Ring 22 bzw. 23 mit geeignetem Elastizitätsmodul eingespannt ist. Die zwischen den beiden Elastikbuchsen angeordnete Verzahnung 24 zwischen Ritzel 10 und Ritzelwelle 11 zur Drehmomentübertragung ist in Figur 2 schematisch angezeigt.

Zweckmäßigerweise ist die radiale Nachgiebigkeit der beiden im Ritzelstirnseitenbereich angeordneten ringförmigen elastisch verformbaren Bauteile 15, 16, 22, 23 niedriger als die Zahnsteifigkeit des Ritzels 10.

## Patentansprüche

1. Antriebszahnritzel für einen Zahnkranz/Ritzel-Antrieb von Drehtrommeln wie z.B. Rohrmühlen, wobei das Ritzel (10) in dem Zahnkranz in Zahneingriff kommt und das Ritzel (10) auf der Ritzelwelle (11) über elastisch verformbare Bauteile (15, 16, 22, 23) nachgiebig gelagert ist,
***dadurch gekennzeichnet, dass***
das Ritzel (10) von beiden Seiten ausgehende Ausnehmungen aufweist, in denen um den Ritzelwellenumfang herum ringförmige Bauteile angeordnet sind, über die sich das Ritzel auf der Ritzelwellenoberfläche abstützt, wobei zwischen den beiden im Ritzelstirnseitenbereich angeordneten ringförmigen Bauteilen eine Verzahnung (17, 24) zwischen Ritzel (10) und Ritzelwelle (11) zur Drehmomentübertragung angeordnet ist, wobei die in den Ausnehmungen des Ritzels (10) angeordneten ringförmigen Bauteile elastisch verformbar sind und das Ritzel auf der Ritzelwellenoberfläche elastisch federnd abstützen und wobei die elastischen Bauteile jeweils aus einer Elastikbuchse bestehen, mit wenigstens einem metallischen Außenring (18, 19) und Innenring (20, 21), zwischen denen konzentrisch ein Elastomer-Ring eingespannt ist.

2. Zahnritzel nach Anspruch 1,
***dadurch gekennzeichnet, dass***
die beiden im Ritzelstirnseitenbereich angeordneten ringförmigen elastisch verformbaren Bauteile außer zur Querkraftübertragung zur Drehmomentübertragung wie sogenannte Spannsätze zwischen Ritzel (10) und Ritzelwelle (11) verspannt sind.

3. Zahnritzel nach einem oder mehreren der vorhergehenden Ansprüche,
***dadurch gekennzeichnet, dass***
die radiale Nachgiebigkeit der beiden im Ritzelstirnseitenbereich angeordneten ringförmigen elastisch verformbaren Bauteile (15, 16, 22, 23) niedriger ist als die Zahnsteifigkeit des Ritzels.

## Claims

1. Drive pinion for a ring gear/pinion drive of rotary drums, such as, for example, tube mills, wherein the pinion (10) meshes with the ring gear, and the pinion (10) is mounted on the pinion shaft (11) in a resilient manner via elastically deformable components (15, 16, 22, 23), **characterized in that** the pinion (10) has recesses which start from both sides and in which annular components are arranged around the pinion shaft circumference, via which annular components the pinion is supported on the pinion shaft surface, wherein, for the transmission of torque, a tooth system (17, 24) is arranged between pinion (10) and pinion shaft (11) between the two annular components arranged in the pinion end face region, wherein the annular components arranged in the recesses of the pinion (10) are elastically deformable and support the pinion on the pinion shaft surface in an elastically flexible manner, and wherein the elastic components each consist of an elastic bush having at least one metallic outer ring (18, 19) and at least one metallic inner ring (20, 21), between which an elastomer ring is concentrically clamped in place.

2. Pinion according to Claim 1, **characterized in that**, for the transmission of torque in addition to the transmission of transverse force, the two annular elastically deformable components arranged in the pinion end face region are restrained like "clamping sets" between pinion (10) and pinion shaft (11).

3. Pinion according to either of the preceding claims, **characterized in that** the radial resilience of the two annular elastically deformable components arranged in the pinion end face region (15, 16, 22, 23) is lower than the tooth rigidity of the pinion.

## Revendications

1. Pignon denté d'entraînement pour un entraînement de type roue dentée/pignon de tambours rotatifs comme par exemple des broyeurs tubulaires, le pignon (10) venant en engagement par ses dents dans la roue dentée et le pignon (10) étant monté de manière flexible sur l'arbre de pignon (11) par le biais de composants déformables élastiquement (15, 16, 22, 23),
**caractérisé en ce que**
le pignon (10) présente des évidements partant des deux côtés dans lesquels sont disposés, tout autour de la périphérie de l'arbre de pignon, des composants annulaires, par le biais desquels le pignon s'appuie sur la surface de l'arbre de pignon, une denture (17, 24) étant disposée entre les deux composants annulaires disposés dans la région du côté frontal du pignon, entre le pignon (10) et l'arbre de pignon (11), pour le transfert de couple, les composants annulaires disposés dans les évidements du pignon (10) étant déformables élastiquement et supportant le pignon de manière élastique à ressort sur la surface de l'arbre de pignon, les composants élastiques se composant à chaque fois d'une douille élastique avec au moins une bague extérieure métallique (18, 19) et une bague intérieure (20, 21), entre lesquelles est serré concentriquement une bague en élastomère.

2. Pignon denté selon la revendication 1,
**caractérisé en ce que**
les deux composants annulaires déformables élastiquement disposés dans la région du côté frontal du pignon sont serrés entre le pignon (10) et l'arbre de pignon (11) comme des systèmes de serrage pour transmettre le couple en plus de la force transversale.

3. Pignon denté selon l'une quelconque ou plusieurs des revendications précédentes,
**caractérisé en ce que**
la flexibilité radiale des deux composants annulaires déformables élastiquement (15, 16, 22, 23) disposés dans la région du côté frontal du pignon est inférieure à la rigidité des dents du pignon.
